# EUROPÄISCHE PATENTANMELDUNG

(11) **EP 4 847 950 A1**
(43) Veröffentlichungstag der Anmeldung: **02.12.2026**
(21) Anmeldenummer: 26174147.4
(22) Anmeldetag: 23.04.2026
(51) Int. Cl.: G01S 7/481, B29C 45/14, G01S 17/04, G01S 17/08

(54) **OPTISCHER SENSOR**

(30) Priorität: 26.05.2025 DE 202025102908 U
(71) Anmelder: Leuze electronic GmbH + Co. KG, 73277 Owen/Teck (DE)
(72) Erfinder: Neder, Verena, 73252 Lenningen (DE); Roth, Thomas, 73230 Kirchheim (DE); Fischle, Thomas, 73728 Esslingen am Neckar (DE); Srajbr, Christian, 70569 Stuttgart (DE); Wolf, Tilo, 73240 Wendlingen (DE)
(74) Vertreter: Ruckh, Rainer Gerhard

(57) **Zusammenfassung**

Die Erfindung betrifft einen optischen Sensor (1) zur Erfassung von Objekten (2) in einem Überwachungsbereich, mit einem Lichtstrahlen (3) emittierenden Sender (4), einem Lichtstrahlen (3) empfangenden Empfänger (5) und mit einer Auswerteeinheit (6), in welcher abhängig von Empfangssignalen ein Objektfeststellungssignal generiert wird. Ein einteilig mit einem Optikträger (9) ausgebildeter Kollimator (10) ist vorhanden, wobei im Kollimator (10) der Sender (4) und im Optikträger (9) der Empfänger (5) gelagert ist.

## Beschreibung

Die Erfindung betrifft einen optischen Sensor.

Ein derartiger optischer Sensor weist generell einen Sender, einen Empfänger und eine Auswerteeinheit auf und dient zur Erfassung von Objekten in einem Überwachungsbereich.

Der Sender emittiert Lichtstrahlen in den Überwachungsbereich. Die von einem zu detektierenden Objekt zurückreflektierten Lichtstrahlen werden zum Empfänger geführt. Die dadurch generierten Empfangssignale werden in der Auswerteeinheit zur Generierung eines Objektfeststellungssignals ausgewertet. Das Objektfeststellungssignal wird als Ausgangssignal im optischen Sensor ausgegeben.

Der optische Sensor kann insbesondere als Distanzsensor ausgebildet sein. Dann werden mit dem Distanzsensor Objektdistanzen von im Überwachungsbereich vorhandenen Objekten bestimmt.

Der Sender des optischen Sensors ist typisch von einer Sendediode, insbesondere einer Laserdiode gebildet, der in einem Kollimator gelagert ist, der z.B. eine Metallhülse aufweist.

Der Empfänger des optischen Sensors ist typisch von einer Photodiode gebildet, die in einem Optikträger gelagert ist, der in einer vorgegebenen Position im optischen Sensor montiert wird.

Zur Montage des optischen Sensors wird der Sender in den Kollimator eingebaut. Dann wird der Kollimator in einer Sollposition relativ zum Optikträger, der den Empfänger aufnimmt, im optischen Sensor eingebaut.

Der Erfindung liegt die Aufgabe zugrunde einen optischen Sensor der eingangs genannten Art bereitzustellen, der kostengünstig herstellbar und einfach montierbar ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich, mit einem Lichtstrahlen emittierenden Sender, einem Lichtstrahlen empfangenden Empfänger und mit einer Auswerteeinheit, in welcher abhängig von Empfangssignalen ein Objektfeststellungssignal generiert wird. Ein einteilig mit einem Optikträger ausgebildeter Kollimator ist vorhanden, wobei im Kollimator der Sender und im Optikträger der Empfänger gelagert ist.

Der optische Sensor dient generell zur Erfassung von Objekten in einem Überwachungsbereich und weist einen Lichtstrahlen emittierenden Sender, einen Lichtstrahlen empfangenden Empfänger und eine Auswerteeinheit auf.

Der Sender sendet Lichtstrahlen in den Überwachungsbereich. Von einem Objekt im Überwachungsbereich werden die Lichtstrahlen zurück zum Empfänger geführt. Die dadurch im Empfänger generierten Empfangssignale werden in der Auswerteeinheit zur Generierung eines Objektfeststellungssignals ausgewertet. Das Objektfeststellungssignal gibt an, ob ein Objekt im Überwachungsbereich vorhanden ist oder nicht.

Der optische Sensor ist vorteilhaft als Distanzsensor ausgebildet, mit dem Distanzen eines Objekts zum optischen Sensor bestimmt werden. Als Objektfeststellungssignal kann ein analoger Distanzwert bestimmt und als Ausgangssignal vom optischen Sensor ausgegeben werden.

Alternativ kann als Objektfeststellungssignal ein binäres Schaltsignal generiert werden, dessen Schaltzustände angeben, ob ein Objekt in einem vorgegebenen Distanzbereich vorhanden ist oder nicht.

Vorteilhaft erfolgen die Distanzmessungen nach einem Pulslaufzeitverfahren. Der Sender emittiert dann Lichtstrahlen in Form von Lichtimpulsen. Zur Distanzbestimmung wird die Laufzeit der Lichtimpulse vom Sender zu einem zu detektierenden Objekt und zurück zum Empfänger gemessen.

Der Sender des optischen Sensors ist vorteilhaft von einer Sendediode gebildet. Insbesondere bei einem optischen Sensor in Form eines Distanzsensors ist die Sendediode von einer Laserdiode gebildet.

Der Empfänger des optischen Sensors ist vorteilhaft von einer Photodiode gebildet. Insbesondere bei einem optischen Sensor in Form eines Distanzsensors ist die Photodiode von einer SPAD (single photon avalanche diode) gebildet.

Der Grundgedanke der Erfindung besteht darin, den Kollimator, der den Sender aufnimmt, einteilig mit dem den Empfänger aufnehmenden Optikträger auszubilden.

Da der Kollimator und der Optikträger nur aus einem Teil bestehen, wird eine vereinfachte und kostengünstige Herstellung dieser Einheiten ermöglicht. Zudem wird die Montage des optischen Sensors vereinfacht, da eine separate Montage von Kollimator und Optikträger sowie dessen Justage relativ zueinander entfällt. Vielmehr kann das den Kollimator und den Optikträger ausbildende Teil in nur einem Montageschritt im optischen Sensor eingebaut werden.

Dabei weist der optische Sensor vorteilhaft ein Gehäuse auf, in welchem sämtliche Komponenten des optischen Sensors integriert sind. Das den Optikträger und den Kollimator bildende Teil ist eine vom Gehäuse separate Einheit und damit unabhängig von den Materialeigenschaften des Gehäuses.

Besonders vorteilhaft sind der Optikträger und der Kollimator von einem Kunststoff-Spritzgussteil gebildet.

Das Kunststoff-Spritzgussteil kann kostengünstig und rationell in nur einem Spritzvorgang hergestellt werden.

Vorteilhaft ist der das Kunststoff-Spritzgussteil bildende Kunststoff ein Hochleistungskunststoff.

Mit dem Begriff Hochleistungskunststoff sind Kunststoffe umfasst, die einen geringen Wärmeausdehnungskoeffizienten aufweisen und damit auch bei stark schwankenden Temperaturen formstabil sind. Zudem weisen diese eine hohe Steifigkeit und Festigkeit auf.

In einer besonders vorteilhaften Ausgestaltung ist der das Kunststoff-Spritzgussteil bildende Kunststoff PPS (Polyphenylensulfid).

Alternativ ist der das Kunststoff-Spritzgussteil bildende Kunststoff ein LCP (Liquid Crystal Polymer).

Gemäß einer weiteren Alternative ist der das Kunststoff-Spritzgussteil bildende PESU (Polyethersulfon).

Gemäß einer vorteilhaften Ausgestaltung ist der das Kunststoff-Spritzgussteil bildende Kunststoff faserverstärkt bzw. partikelgefüllt.

Damit wird die Dimensionsstabilität des Kunststoff-Spritzgussteils weiter erhöht.

Beispielsweise ist der Kunststoff mit Glasfasern verstärkt.

Eine besonders geeignete Kombination ist ein glasfaserverstärkter LCP.

Besonders vorteilhaft ist der Kunststoff mit elektrisch leitfähigen Fasern bzw. Partikeln verstärkt.

Als elektrisch leitfähige Partikel können prinzipiell metallische Partikel eingesetzt werden. Besonders vorteilhaft sind die elektrisch leitfähigen Fasern Kohlenstoff-Fasern.

Durch die elektrisch leitfähigen Partikel bzw. Fasern werden elektrostatische Aufladungen, die zu Beschädigungen von elektronischen Bauteilen, insbesondere des Senders, führen können, vermieden.

Besonders vorteilhafte Ausbildungen des Kunststoff-Spritzgussteils bestehen aus PPS oder PESU mit elektrisch leitfähigen Fasern, vorzugsweise bestehend aus Kohlenstoff.

Vorteilhaft enthält der Kunststoff einen Faseranteil im Bereich von 25% bis 35%.

Besonders vorteilhaft beträgt der Faseranteil etwa 30%.

Zur Montage des optischen Sensors wird vorteilhaft der Sender durch Einpressen und/oder durch Kleben im Kollimator lagefixiert.

Der Sender wird dabei über eine hintere Öffnung des Kollimators eingeführt und dort in einer Sollposition verpresst. In der Sollposition liegt der Sender zentral in dem den Kollimator in axialer Richtung durchsetzenden Hohlraum, so dass dort die vom Sender emittierten Lichtstrahlen geführt werden.

Nach dem Einpressen des Senders kann dieser zusätzlich durch Kleben im Kollimator fixiert werden, wodurch der Sender gegen ein Verrutschen gesichert ist. Beispielsweise kann hierzu Klebstoff als Kehlnaht rückseitig am Kollimator angebracht werden.

Gemäß einer vorteilhaften Ausgestaltung ist dem Sender eine im Kollimator gelagerte Sendelinse vorgeordnet.

Die Sendelinse befindet sich vorteilhaft im Bereich der vorderen Öffnung des Kollimators.

Gemäß einer ersten Variante ist die Sendelinse durch Umspritzen mit dem das Kunststoff-Spritzgussteil bildenden Kunststoff im Kollimator lagefixiert.

Die Sendelinse wird dann als Einlegeteil in die Spritzgussform, die zur Herstellung des Kunststoff-Spritzgussteils dient, eingelegt.

Die Lagefixierung der Sendelinse erfolgt dann allein durch Umspritzen des Kunststoffs während des Spritzvorgangs zur Herstellung des Kunststoff-Spritzgussteils. Vorteilhaft ist hierbei, dass keine zusätzlichen Befestigungsmittel zur Lagefixierung der Sendelinse benötigt werden.

Gemäß einer zweiten Alternative ist die Sendelinse durch Kleben im Kollimator lagefixiert.

Dabei ist die Sendelinse an einem Absatz des Kunststoff-Spritzgussteils positioniert.

Durch den Absatz wird die Sollposition der Sendelinse auf einfache Weise genau vorgegeben.

Gemäß einer vorteilhaften Weiterbildung ist im Kollimator eine Blende vorhanden.

Dabei ist die Blende zwischen der Sendelinse und dem Sender angeordnet.

Vorteilhaft liegt die Blende in der Mitte zwischen Sender und Sendelinse.

Besonders vorteilhaft ist die Blende Bestandteil des Kunststoff-Spritzgussteils.

Für die Ausbildung der Blende braucht somit kein separates Teil vorgesehen werden, das mit zusätzlichen Befestigungsmitteln im Kollimator befestigt werden muss.

Vielmehr kann die Blende bei dem Spritzvorgang zur Herstellung des Kunststoff-Spritzgussteils ohne zusätzlichen Aufwand hergestellt werden.

Mit der Blende wird der Strahlquerschnitt der Lichtstrahlen vorgegeben.

Vorteilhaft wird die Blende im an die Blendenöffnung anschließenden Randbereich möglichst dünn ausgeführt, um Reflexionen am inneren Rand und Beugungen der Lichtstrahlen zu verhindern. Die minimale erreichbare Dicke ist durch den Spritzgussprozess und das Fließverhalten des Kunststoffs bestimmt. Zudem muss die Dicke der Blende so groß sein, dass das dort vorhandene Kunststoff noch opak ist.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Einzeldarstellung eines Kollimators und Optikträgers ausbildenden Kunststoff-Spritzgussteils für den optischen Sensor gemäß Figur
a) Schnittdarstellung,
b) perspektivische Darstellung.
- Figur 3:: Kunststoff-Spritzgussteil gemäß Figur 2 mit darin gelagerten optischen und optoelektronischen Komponenten.

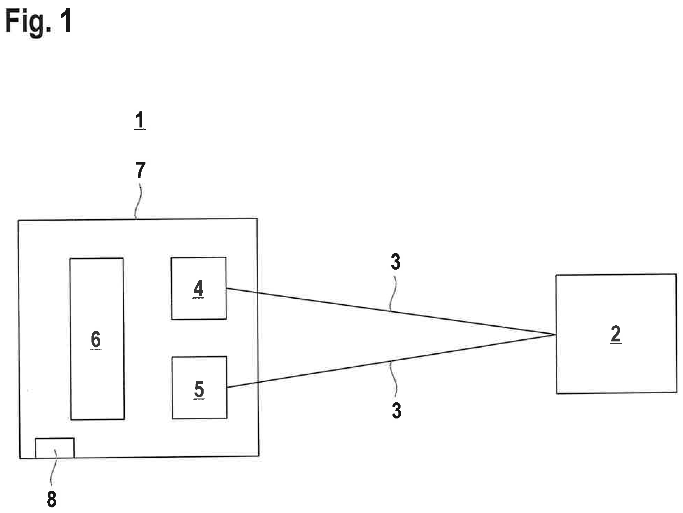

Figur 1 zeigt stark schematisiert ein Ausführungsbeispiel des erfindungsgemäßen optischen Sensors 1.

Der optische Sensor 1 dient generell zur Erfassung von Objekten 2 in einem Überwachungsbereich und weist einen Lichtstrahlen 3 emittierenden Sender 4, einen Lichtstrahlen 3 empfangenden Empfänger 5 und eine Auswerteeinheit 6 auf. Diese Komponenten des optischen Sensors 1 sind in einem Gehäuse 7 integriert. An einer Gehäusewand ausmündend ist ein Ausgang 8 gelagert, über welchen vom optischen Sensor 1 ein Ausgangssignal ausgegeben wird. Der Sender 4 sendet Lichtstrahlen 3 in den Überwachungsbereich. Von einem Objekt 2 im Überwachungsbereich werden die Lichtstrahlen 3 zurück zum Empfänger 5 geführt. Die dadurch im Empfänger 5 generierten Empfangssignale werden in der Auswerteeinheit 6 zur Generierung eines Objektfeststellungssignals ausgewertet. Das Objektfeststellungssignal wird vom optischen Sensor 1 als Ausgangssignal ausgegeben.

Der optische Sensor 1 ist im vorliegenden Fall als Distanzsensor ausgebildet, mit dem Distanzen eines Objekts 2 zum optischen Sensor 1 bestimmt werden. Als Objektfeststellungssignal kann ein analoger Distanzwert bestimmt und als Ausgangssignal vom optischen Sensor 1 ausgegeben werden.

Alternativ kann als Objektfeststellungssignal ein binäres Schaltsignal generiert werden, dessen Schaltzustände angeben, ob ein Objekt 2 in einem vorgegebenen Distanzbereich vorhanden ist oder nicht.

Vorteilhaft erfolgen die Distanzmessungen nach einem Pulslaufzeitverfahren. Der Sender 4 emittiert dann Lichtstrahlen 3 in Form von Lichtimpulsen. Zur Distanzbestimmung wird die Laufzeit der Lichtimpulse vom Sender 4 zu einem zu detektierenden Objekt 2 und zurück zum Empfänger 5 gemessen.

Der Sender 4 des optischen Sensors 1 ist vorteilhaft von einer Sendediode gebildet. Insbesondere bei einem optischen Sensor 1 in Form eines Distanzsensors ist die Sendediode von einer Laserdiode gebildet.

Der Empfänger 5 des optischen Sensors 1 ist vorteilhaft von einer Photodiode gebildet. Insbesondere bei einem optischen Sensor 1 in Form eines Distanzsensors ist die Photodiode von einer SPAD (single photon avalanche diode) gebildet.

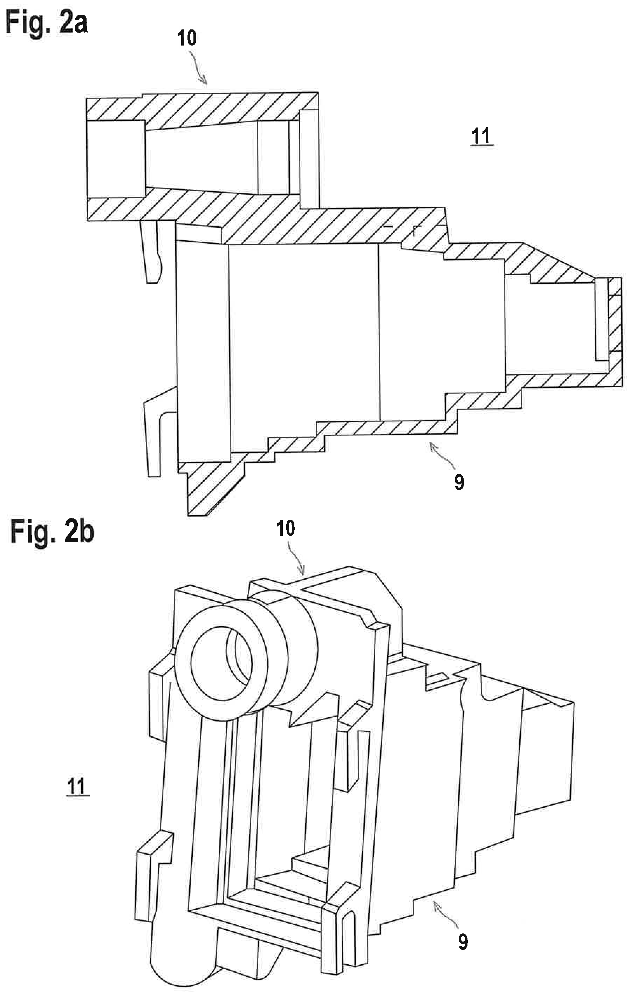

Erfindungsgemäß weist der optische Sensor 1 einen einteilig mit einem Optikträger 9 ausgebildeten Kollimator 10 auf (Figuren 2a, 2b).

Der im Wesentlichen hohlzylindrische Kollimator 10 dient zur Aufnahme des Senders 4 des optischen Sensors 1 und diesem zugeordneten Optikelementen, während der Optikträger 9 zur Aufnahme des Empfängers 5 und diesem zugeordneten Optikelementen dient.

Die zylindrische Wand des Optikträgers 9 umschließt einen Hohlraum, der in axialer Richtung des Optikträgers 9 verläuft und am vorderen und hinteren Ende ausmündet.

Die Wände des Optikträgers 9 bilden einen Tubus aus, wobei die Wände einen Hohlraum umschließen, der sich von seiner Öffnung am hinteren Ende zu seiner Öffnung am vorderen Ende hin verbreitert.

Der Kollimator 10 mit dem Optikträger 9 ist von einem Kunststoff- Spritzgussteil 11 gebildet.

Das Kunststoff-Spritzgussteil 11 kann kostengünstig und rationell in nur einem Spritzvorgang hergestellt werden.

Vorteilhaft ist der das Kunststoff-Spritzgussteil 11 bildende Kunststoff ein Hochleistungskunststoff.

Mit dem Begriff Hochleistungskunststoff sind Kunststoffe umfasst, die einen geringen Wärmeausdehnungskoeffizienten aufweisen und damit auch bei stark schwankenden Temperaturen formstabil sind. Zudem weisen diese eine hohe Steifigkeit und Festigkeit auf.

In einer besonders vorteilhaften Ausgestaltung ist der das Kunststoff-Spritzgussteil 11 bildende Kunststoff PPS (Polyphenylensulfid).

Alternativ ist der das Kunststoff-Spritzgussteil 11 bildende Kunststoff ein LCP (Liquid Crystal Polymer).

Gemäß einer weiteren Alternative ist der das Kunststoff-Spritzgussteil 11 bildende PESU (Polyethersulfon).

Gemäß einer vorteilhaften Ausgestaltung ist der das Kunststoff-Spritzgussteil 11 bildende Kunststoff faserverstärkt.

Damit wird die Dimensionsstabilität des Kunststoff-Spritzgussteils 11 weiter erhöht.

Beispielsweise ist der Kunststoff mit Glasfasern verstärkt.

Eine besonders geeignete Kombination ist ein glasfaserverstärkter LCP.

Besonders vorteilhaft ist der Kunststoff mit elektrisch leitfähigen Fasern oder Partikeln verstärkt.

Als elektrisch leitfähige Partikel können prinzipiell metallische Partikel eingesetzt werden. Besonders vorteilhaft sind die elektrisch leitfähigen Fasern Kohlenstoff-Fasern.

Durch die elektrisch leitfähigen Fasern bzw. Partikel werden elektrostatische Aufladungen, die zu Beschädigungen von elektronischen Bauteilen, insbesondere des Senders 4, führen können, vermieden.

Besonders vorteilhafte Ausbildungen des Kunststoff-Spritzgussteils 11 bestehen aus PPS oder PESU mit elektrisch leitfähigen Fasern, vorzugsweise bestehend aus Kohlenstoff.

Vorteilhaft enthält der Kunststoff einen Faseranteil im Bereich von 25% bis 35%.

Besonders vorteilhaft beträgt der Faseranteil etwa 30%.

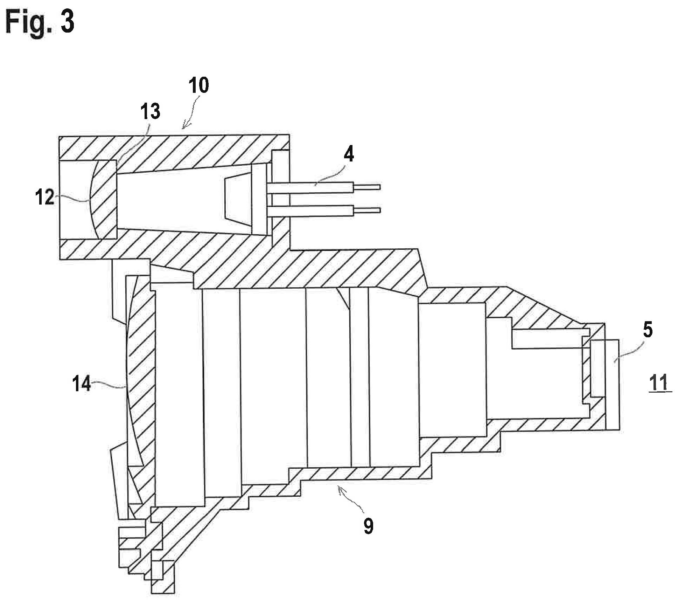

Figur 3 zeigt das den Kollimator 10 und den Optikträger 9 ausbildende Kunststoff-Spritzgussteil 11 mit den darin gelagerten optischen und optoelektronischen Komponenten des optischen Sensors 1.

Die den Sender 4 ausbildende Laserdiode wird über eine hintere Öffnung des Kollimators 10 eingeführt und dort in einer Sollposition verpresst. In der Sollposition liegt die Laserdiode zentral in dem den Kollimator 10 in axialer Richtung durchsetzenden Hohlraum, so dass dort die vom Sender 4 emittierten Lichtstrahlen 3 geführt werden.

Nach dem Einpressen des Senders 4 kann dieser zusätzlich durch Kleben im Kollimator 10 fixiert werden, wodurch der Sender 4 gegen ein Verrutschen gesichert ist.

Im Bereich der vorderen Öffnung ist eine Sendelinse 12 gelagert.

Prinzipiell kann die Sendelinse 12 durch Umspritzen mit dem das Kunststoff-Spritzgussteil 11 bildenden Kunststoff im Kollimator 10 lagefixiert sein.

Im vorliegenden Fall wird die Sendelinse 12 an einem Absatz 13 an der Innenwand des Kollimators 10 positioniert und dort durch Kleben lagefixiert.

Zwischen dem Sender 4 und der Sendelinse 12 kann als weiteres optisches Element eine Blende vorhanden sein (in Figur 3 nicht dargestellt).

Vorteilhaft ist die Blende Bestandteil des Kunststoff-Spritzgussteils 11.

Im Bereich der hinteren Öffnung des Optikträgers 9 ist eine die den Empfänger 5 bildende SPAD gelagert, die ihrerseits auf einer nicht dargestellten Leiterplatte angeordnet ist.

Im Bereich der vorderen Öffnung des Optikträgers 9 ist eine Empfangslinse 14 gelagert, die analog zur Sendelinse 12 am Optikträger 9 positioniert und dort festgeklebt wird.

### Bezugszeichenliste

- (1): optischer Sensor
- (2): Objekt
- (3): Lichtstrahl
- (4): Sender
- (5): Empfänger
- (6): Auswerteeinheit
- (7): Gehäuse
- (8): Ausgang
- (9): Optikträger
- (10): Kollimator
- (11): Kunststoff-Spritzgussteil
- (12): Sendelinse
- (13): Absatz
- (14): Empfangslinse

## Patentansprüche

1. Optischer Sensor (1) zur Erfassung von Objekten (2) in einem Überwachungsbereich, mit einem Lichtstrahlen (3) emittierenden Sender (4), einem Lichtstrahlen (3) empfangenden Empfänger (5) und mit einer Auswerteeinheit (6), in welcher abhängig von Empfangssignalen ein Objektfeststellungssignal generiert wird, **dadurch gekennzeichnet, dass** ein einteilig mit einem Optikträger (9) ausgebildeter Kollimator (10) vorhanden ist, wobei im Kollimator (10) der Sender (4) und im Optikträger (9) der Empfänger (5) gelagert ist.

2. Optischer Sensor (1) nach Anspruch 1, **dadurch gekennzeichnet, dass** dieser ein Distanzsensor ist, und/oder dass der Sender (4) von einer Laserdiode gebildet ist.

3. Optischer Sensor (1) nach einem der Ansprüche 1 oder 2, **dadurch gekennzeichnet, dass** der Optikträger (9) und der Kollimator (10) von einem Kunststoff-Spritzgussteil (11) gebildet sind, wobei das Kunststoff-Spritzgussteil (11) bildende Kunststoff ein Hochleistungskunststoff ist.

4. Optischer Sensor (1) nach Anspruch 3, **dadurch gekennzeichnet, dass** der das Kunststoff-Spritzgussteil (11) bildende Kunststoff PPS (Polyphenylensulfid) oder ein LCP (Liquid Crystal Polymer) oder ein PESU (Polyethersulfon) ist.

5. Optischer Sensor (1) nach einem der Ansprüche 3 oder 4, **dadurch gekennzeichnet, dass** der das Kunststoff-Spritzgussteil (11) bildende Kunststoff faser- oder partikelverstärkt ist.

6. Optischer Sensor (1) nach Anspruch 5, **dadurch gekennzeichnet, dass** der Kunststoff mit elektrisch leitfähigen Fasern verstärkt ist.

7. Optischer Sensor (1) nach Anspruch 6, **dadurch gekennzeichnet, dass** die elektrisch leitfähigen Fasern Kohlenstoff-Fasern sind.

8. Optischer Sensor (1) nach einem der Ansprüche 5 bis 7, **dadurch gekennzeichnet, dass** der Kunststoff einen Faseranteil im Bereich von 25% bis 35% enthält.

9. Optischer Sensor (1) nach einem der Ansprüche 1 bis 8, **dadurch gekennzeichnet, dass** der Sender (4) durch Einpressen und/oder durch Kleben im Kollimator (10) lagefixiert ist.

10. Optischer Sensor (1) nach einem der Ansprüche 1 bis 9, **dadurch gekennzeichnet, dass** dem Sender (4) eine im Kollimator (10) gelagerte Sendelinse (12) vorgeordnet ist, wobei die Sendelinse (12) durch Umspritzen mit dem das Kunststoff-Spritzgussteil (11) bildenden Kunststoff im Kollimator (10) lagefixiert ist.

11. Optischer Sensor (1) nach einem der Ansprüche 1 bis 10, **dadurch gekennzeichnet, dass** im Kollimator (10) eine Blende vorhanden ist.

12. Optischer Sensor (1) nach einem der Ansprüche 10 und 11, **dadurch gekennzeichnet, dass** die Blende zwischen der Sendelinse (12) und dem Sender (4) angeordnet ist.

13. Optischer Sensor (1) nach einem der Ansprüche 11 oder 12, **dadurch gekennzeichnet, dass** die Blende Bestandteil des Kunststoff-Spritzgussteils (11) ist.

14. Optischer Sensor (1) nach einem der Ansprüche 1 bis 13, **dadurch gekennzeichnet, dass** dessen Komponenten in einem Gehäuse (7) angeordnet sind.

15. Optischer Sensor (1) nach Anspruch 14, **dadurch gekennzeichnet, dass** das den Kollimator (10) und den Optikträger (9) bildende Kunststoff-Spritzgussteil (11) ein vom Gehäuse (7) separates Teil ist.
